# EUROPEAN PATENT SPECIFICATION

(11) **EP 2 084 959 B1**
(45) Date of publication and mention of the grant of the patent: **10.11.2010**
(21) Application number: 09001198.2
(22) Date of filing: 29.01.2009
(51) Int. Cl.: A01K 1/00, A01K 31/22, F24F 7/00

(54) **Livestock accommodation with natural ventilation**
Viehstall mit natürlicher Lüftung
Bâtiment d'élevage avec ventilation naturelle

(30) Priority: 29.01.2008 NL 1034968
(43) Date of publication of application: 05.08.2009
(73) Proprietor: Van de Ven Beheer B.V., 5521 DZ Eersel (NL)
(72) Inventor: Blondeel, Paul, 2900 Schoten (BE)
(74) Representative: Van Someren, Petronella F. H. M.

(56) References cited:
- GB-A- 1 223 268
- US-A- 1 658 663
- US-A- 2 039 562
- US-B1- 6 295 765

## Description

The present invention relates to a livestock accommodation which is provided with a shed, and in particular to a livestock accommodation for keeping poultry. Such livestock accommodations are already known, see e.g. US-A-1658663 and GB-A-1223268.

Known livestock accommodations generally consist of a shed, or a number of sheds, in which livestock is kept. In some cases an outside accommodation is provided in which the animals can stay for a determined period of time. This outside accommodation is usually separate from the livestock accommodation and can consist of a piece of land or meadow where the animals can eat, move and so on. However, because the animals in the outside accommodation also come into contact with other animals, particularly birds, there is the danger of the transmission of infectious diseases, such as for instance avian influenza. This creates a conflict between the well-being of animals on the one hand and public health in general on the other.

In bad weather conditions, such as persistent cold, and during the night the livestock can be kept in the shed. The shed is then closed. This results in the necessity for sufficient ventilation. This ventilation is provided by so-called mechanical, or forced, ventilation. A fan is here arranged in the shed which draws in air from the outside environment and blows it into the shed. The air can leave the shed via a ventilation opening. In addition to or instead of the ventilation opening, a second fan can be provided which blows air from the shed to the outside.

Mechanical ventilation does however require energy and also has an unnatural effect for the livestock being kept in the shed, also because the mechanical ventilation can result in noise and the associated stress in animals. If a livestock accommodation consists of multiple sheds, each shed comprises a separate ventilation setup. The cost of maintaining and using such a ventilation system can represent a considerable part of the overall costs of the livestock accommodation.

The present invention has for its object to provide a livestock accommodation wherein the above stated problems do not occur, or at least do so to lesser extent.

This object is achieved with a livestock accommodation as defined in claim 1. Such a livestock accommodation comprises a shed extending in radial direction relative to a central hall. The shed is provided with a first ventilation opening which is in contact with the central hall and a second ventilation opening which is in contact with the air outside the shed. The central hall is provided with a plurality of controllable third ventilation openings which are in contact with the outside air and which are distributed substantially uniformly along an outer periphery of the central hall.

Such a livestock accommodation provides the option of natural ventilation of a shed. This can be achieved by closing third ventilation openings which are directed into the wind and opening ventilation openings directed away from the wind. The flow profile of the air around the central hall creates a suction force in the ventilation openings directed away from the wind, the so-called chimney effect, which draws air out of the central hall. This air flows out of the shed via the first ventilation opening(s). Inside the shed fresh air is drawn in from outside via the second ventilation opening(s). A more energy-efficient livestock accommodation can be obtained due to the natural ventilation.

Such a control of the natural ventilation takes place automatically.

The livestock accommodation therefore comprises an anemometer as well as a control unit connected to this meter. The control unit is connected to said controllable third ventilation openings and comprises a control for the purpose of obtaining natural ventilation, wherein the control comprises the functions of closing controllable third ventilation openings which are directed into the wind and opening controllable third ventilation openings directed away from the wind. The skilled person will appreciate that an embodiment wherein the anemometer is not coupled to the control unit, but wherein the measured wind direction and/or speed is entered into the control unit, is also possible, but does not fall within the scope of the claimed invention.

Because the ventilation acts via a central core, it is advantageous if the livestock accommodation comprises a plurality of sheds as described above. The sheds are herein placed such that they extend radially relative to the central hall. The central hall can hereby also serve to combine varying services and techniques. In the case where the livestock accommodation is used to keep for instance poultry, the central hall can serve as central discharge for eggs and/or manure. The eggs come for instance from the sheds and are transported from these sheds to the central hall where a central processing can take place. This does away with the necessity of collecting and/or processing the eggs separately in each shed. This also results in a more efficient livestock accommodation.

The heat of the air drawn in by the natural ventilation is preferably reused. This objective is achieved if the central hall comprises a fan for drawing in outside air in addition to a heat exchanger for exchanging heat between the indrawn outside air and air coming from a shed. The air from the shed, which is heated by the animals, can therefore be used to heat the indrawn outside air. This heat can be used in various ways.

In an embodiment the livestock accommodation comprises a manure storage device, also referred to as manure drying system, which is preferably placed in or around the central hall and which is adapted to store manure from a shed, wherein the manure storage device comprises an air supply for supplying the indrawn outside air and/or air coming from a shed to the stored manure. The costs of manure disposal are related to the weight of the manure. It is therefore recommended to extract as much moisture as possible from the manure. The above mentioned indrawn outside air and/or air coming from a shed are heated. Blowing this warm air through the manure dries it, whereby the weight of the manure decreases.

In another or further embodiment a shed comprises a fourth ventilation opening for controlling the airflow of the indrawn outside air to the shed. In this embodiment the indrawn outside air, which is preferably heated by the heat exchanger, is fed back to the shed, optionally in order to heat it. This air generally has a lower air humidity than the air already present in the shed. This feedback can be particularly advantageous when the temperature of the outside air is considerably lower than the desired temperature in the shed.

The above-mentioned air from a shed for the purpose of drying manure is preferably air comprising a mixture of indrawn air heated by the heat exchanger and fed back to the shed by a fourth ventilation opening and air heated in the shed. This latter air consists mainly of air drawn in by means of the chimney effect through a second ventilation opening.

At least one ventilation opening from the group consisting of the first, second and fourth ventilation openings can preferably be controlled by the control unit. It is particularly advantageous that all ventilation openings are controllable. A good balance can hereby be achieved between, among other factors, the air flow rate, the manure heating or manure drying and the shed heating.

It is recommended that a shed comprises one or more temperature meters which are connected to the control unit, wherein the control unit is adapted to control at least one of the first, second, third and/or fourth ventilation openings for the purpose of obtaining a preset temperature in the shed. It is thus possible to regulate ventilation and temperature inside a shed, and in particular independently of each other. Use can be made here of information about the outside air, originating for instance from a weather station. The desired conditions can be achieved more quickly using this information. The above-mentioned anemometer can be included in such a weather station.

For the purpose of stimulating the natural ventilation it is advantageous when a shed is provided with a roof which increases in height in a direction toward the central hall. Because warm air rises, a natural flow toward the hall is obtained. A further favourable effect is obtained by placing the first ventilation opening close to the roof of the shed.

An advantageous arrangement of the livestock accommodation can be obtained when sheds of the plurality of sheds are separated from each other and wherein an intermediate space comprises an outside accommodation for livestock. It is possible to use the outside accommodation as day accommodation and the corresponding sheds as night accommodation. A possible embodiment can consist of sheds which are substantially bar-shaped and which extend radially relative to the central hall. The space created as a result can be used as outside accommodation for animals, and in particular for the animals which are generally accommodated in one of the adjacent sheds. Such a space can possibly serve as grass pasture for cows and/or sheep or a space for foraging chickens.

In order to facilitate access to the outside accommodation it is advantageous when a shed is provided with a wall which forms a separation between the shed and the outside accommodation, and wherein the wall can be opened substantially in its entirety, for instance in that it is slidable or can be rolled up. When closed, this wall preferably isolates the shed from the outside accommodation. It must be noted that the wall can also consist of doors which can be opened. Both options can relate to the wall as a whole or only to a part thereof. Such a preferably insulated wall can also serve as second ventilation opening, this doing away with the necessity for separate ventilation openings in addition to said wall.

The outside accommodation is preferably provided on a side remote from the central hall with an air-transmitting opening. Windbreak netting is a particularly advantageous material here for closing the opening, because the air transmission is retained and the wind, which may blow onto the netting, is broken by this latter, for instance by reducing the air speed, whereby the living conditions in the outside accommodation remain pleasant.

The outside accommodation is preferably also covered. In order to keep the living conditions inside the outside accommodation as natural as possible it is possible to opt for a light-transmitting covering. It is also possible to opt for a covering which is substantially watertight. It is in any case advantageous when the covering is closed to the extent that excreta from other animals located outside the outside accommodation, such as for instance birds flying over, cannot penetrate into the outside accommodation. Possible infection by these animals is hereby prevented.

A further development of the outside accommodation comprises a fenced outlying area adjacent thereto, for instance the edge of a wood. The above-mentioned windbreak netting can here form a separation between the outside accommodation and the outlying area. It is advantageous if the windbreak netting can be at least partially opened, for instance in that it can be at least partially rolled up or in that a door is incorporated therein. The animals can hereby be kept in the outside accommodation at the time of an infectious disease, such as for instance avian influenza or swine fever.

It is advantageous when the sheds of the said plurality of sheds are substantially identical. The number of different components required to construct such sheds are hereby limited to a minimum and a simpler construction method can be obtained.

A livestock accommodation as discussed above is particularly suitable for keeping poultry. It is also advantageous if the outside accommodation is provided with artificial grass. For instance in the case of chickens an outside accommodation is hereby obtained which is easy to clean and which also ensures optimal foraging behaviour.

The present invention also provides a method for ventilating a livestock accommodation as described above, which is **characterized in that** this method comprises the steps of closing controllable third ventilation openings which are directed into the wind and opening controllable third ventilation openings which are directed away from the wind.

In a preferred method the method further comprises the step of controlling the airflow in a shed by means of controlling at least one ventilation opening of the group consisting of the first, second and fourth ventilation openings.

Another or further preferred method comprises of measuring the temperature in a shed, determining a difference between the measured temperature and a predetermined temperature and modifying said control of the airflow subject to the difference.

The present invention will be discussed in more detail hereinbelow with reference to the accompanying figures, wherein identical reference numerals are used to designate identical or similar components, and wherein:
Figures 1A and 1B show general embodiments of a livestock accommodation according to the present invention;
Figures 2A and 2B show interior views of embodiments of the central hall which correspond to the embodiments of figures 1A and 1B respectively;
Figure 3 shows an outline view of an embodiment of a livestock accommodation with a plurality of sheds and outside accommodations;
Figures 4A and 4B show detailed views of a possible shed and outside accommodation of the embodiment of figure 3;
Figures 5A, 5B and 5C show embodiments of a manure storage device for use in a livestock accommodation according to the present invention; and
Figure 6 shows a schematic sectional view corresponding to the embodiment of figure 5C.

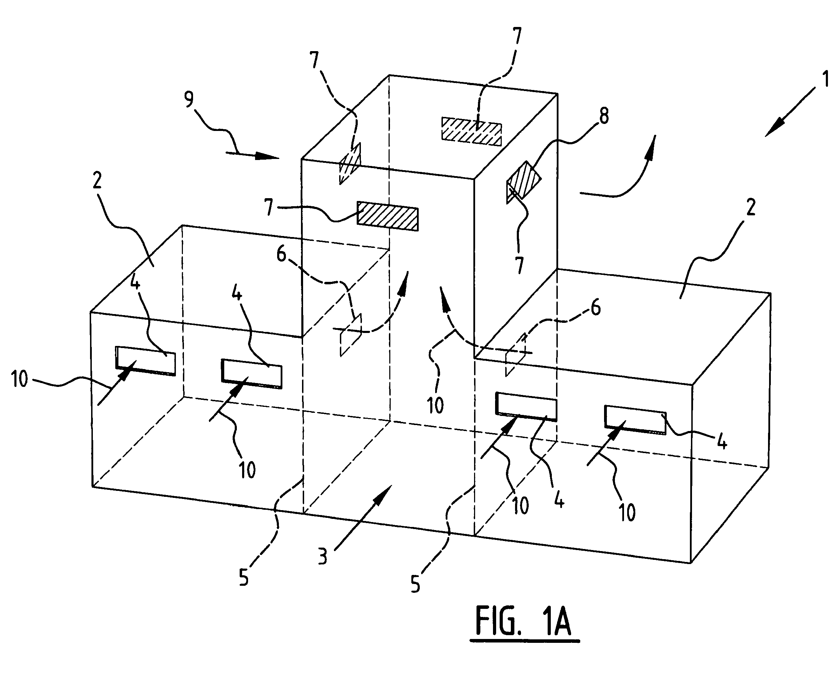

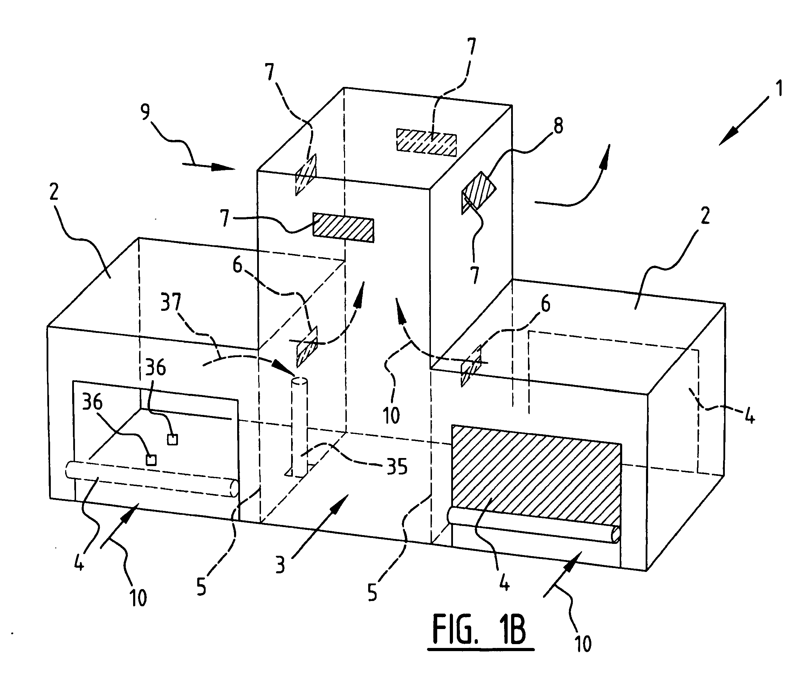

Figures 1A and 1B show general embodiments of a livestock accommodation 1 according to the present invention. Two sheds 2 are connected herein to a central hall 3. Arranged in the sheds are a number of second ventilation openings 4 which are in contact with the outside air. In figure 1B roll-up walls are used as second ventilation opening 4. These walls can also serve as closure between shed and outside accommodation. An air-transmitting connection is further formed in walls 5 between the central hall and sheds 2 by means of first ventilation openings 6. In figure 1B these ventilation openings are controllable. The central hall is provided with third ventilation openings 7 which are preferably placed higher than the first ventilation openings 6. The third ventilation openings 7 are controllable. The control can take an automatic form or can, but not according to the invention, consist of manual adjustment of ventilation openings 7. In figures 1A and 1B the ventilation openings 7 are provided with a flap 8 which can be closed. Other known techniques are also possible for embodying controllable ventilation openings, such as for instance a roll-up screen.

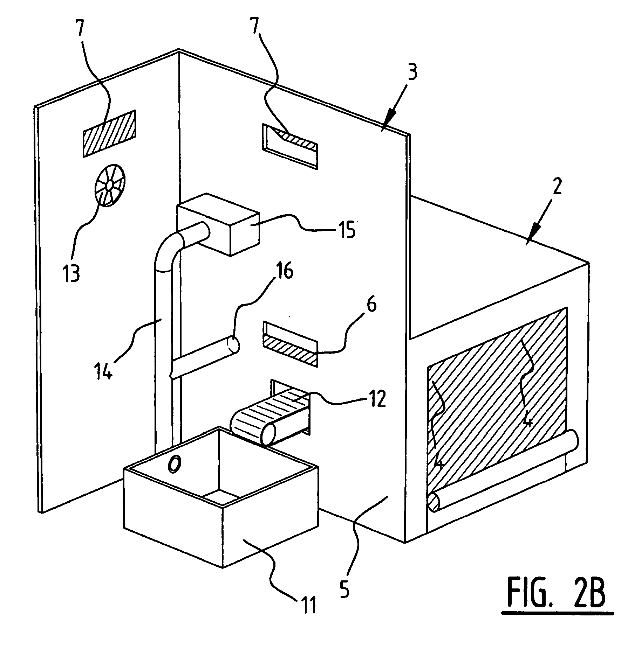

Shown in the left-hand shed in figure 1B is an air tube 35 provided with a mechanical fan. Using this fan warm air can be extracted from the shed, see arrow 37, and can then be used to dry the manure. Such a tube can be arranged in each shed. Also shown are temperature meters 36 which provide information about the temperature to a control unit (not shown) . This control unit, which likewise receives wind information from an anemometer) can bring about the desired temperature and/or ventilation in the shed by controlling the different ventilation openings 4,6,7 and/or 16 (see figure 2B).

In figures 1A and 1B the wind direction is as according to arrow 9. By now closing the third ventilation opening against which the wind is blowing and keeping the other openings opened, a chimney effect can be obtained whereby air is drawn in. An airflow will hereby be obtained in the livestock accommodation as according to arrows 10. In figures 1A and 1B ventilation openings 7 lying parallel to the wind direction are closed. It requires no explanation that the strength of the ventilation, for instance the air flow rate, can be controlled if the respective ventilation openings are given a controllable form.

Because ventilation openings 7 are distributed regularly along the outer periphery of central hall 3, it is possible to achieve such a chimney effect irrespective of the wind direction.

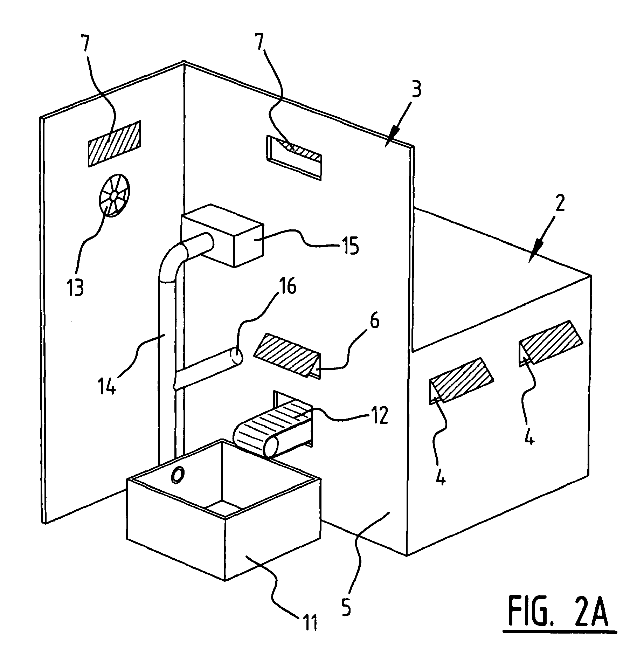

Figures 2A and 2B show further developments of the general embodiments of figures 1A and 1B. Shown here is an interior view of central hall 3. A manure storage device 11 for the manure coming from sheds 2 is arranged in this hall 3. The manure is transported on conveyor belts 12 from shed 2 to manure storage device 11. A cost-saving can be achieved by drying the manure by making use of indrawn outside air preferably heated by the heat exchanger. This outside air is drawn into central hall 3 by a fan 13. Before the air is carried by means of a pipe system 14 to sheds 2 and/or manure storage device 11, it is heated by a heat exchanger 15, this heat exchange being provided between the warm air coming from sheds 2 and the outside air. The heated air can also be fed back to sheds 2 in order to maintain the temperature in sheds 2 in cold weather. This airflow can be controlled by means of fourth ventilation openings 16 or by the heat exchanger 15 itself. In figure 2B the fourth ventilation opening is embodied as a controllable screen. It is also possible to use the warm air from the shed to dry the manure. This air can optionally be mixed with the air heated by the heat exchanger and fed back into the shed. An example of such a device is obtained when the fourth ventilation opening is combined with an air tube as shown in figure 1B.

The costs of manure disposal and the energy costs of the whole system are reduced by the above system.

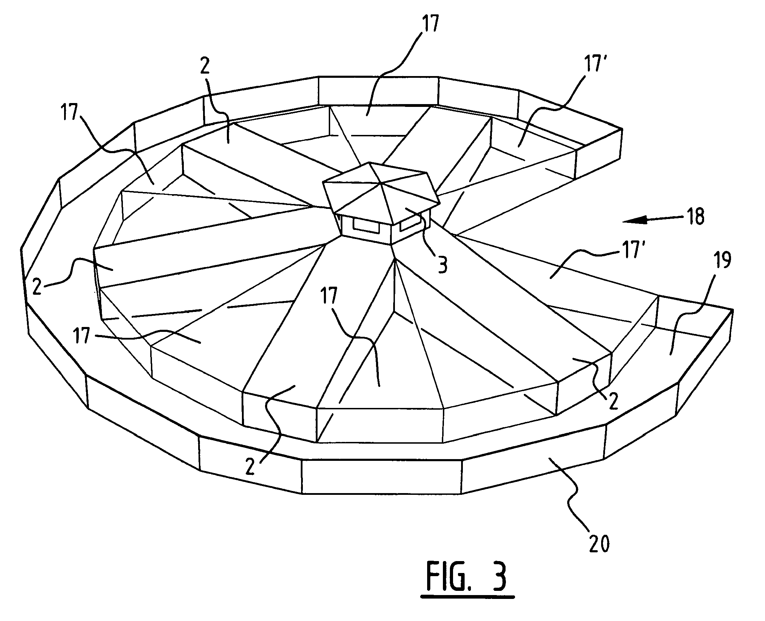

Figure 3 shows an embodiment of a livestock accommodation wherein use is made of the space available between sheds 2. In this figure the central hall 3 is connected to five sheds 2. Outside accommodations 17 are arranged between these sheds. One opening 18 is used for the supply and removal of goods to and from central hall 3. Two outside accommodations 17' are arranged adjacently of opening 18. Running around the livestock accommodation, with the exception of opening 18, is a natural outlying area 19 which is enclosed by a fence 20.

A more efficient method can be obtained by combining a plurality of sheds 2 and a central hall 3. If the sheds are used for instance to keep poultry, eggs that are laid can be removed to the central hall. It is thus hereby possible to suffice with one device for packing the eggs, this in contrast to one device per shed if the sheds are not connected to each other.

It should be noted that the natural ventilation in sheds 2 is enhanced in that sheds 2 are provided with roofs which increase in height in a direction toward central hall 3. Warm air which rises in the shed will therefore flow in the direction of central hall 3 due to the form of the roof.

The sheds 2 in figure 1 are further substantially identical. This simplifies the construction of livestock accommodation 1.

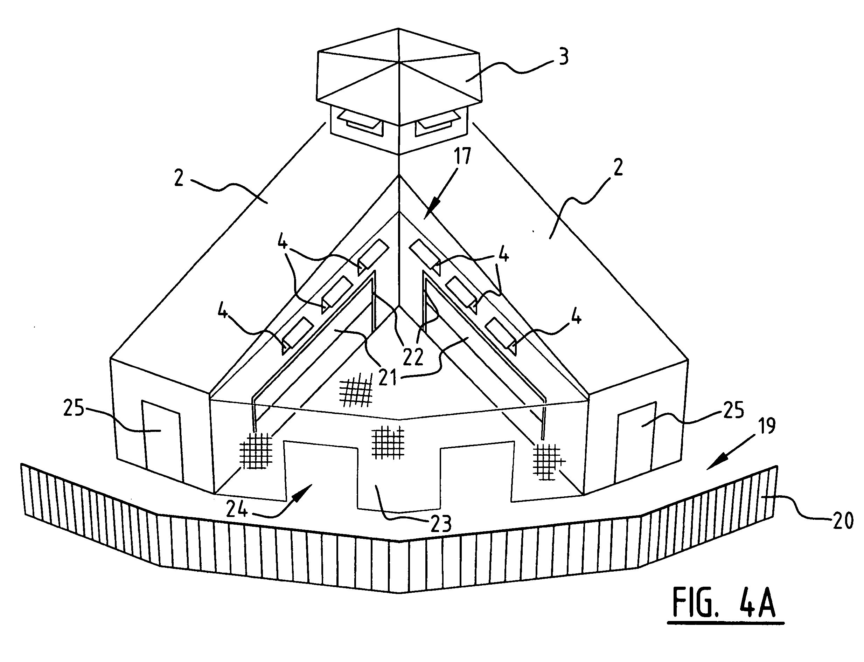

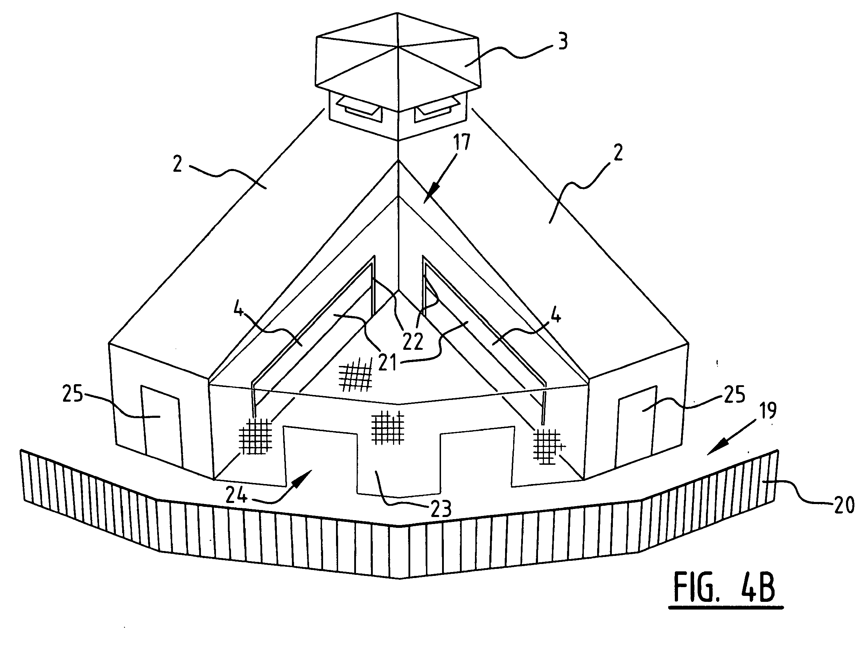

Figures 4A and 4B show detail views of an embodiment of a shed and an outside accommodation of the livestock accommodation of figure 3. Each shed is provided with a wall 21 which can be opened substantially in its entirety. In figure 4A the wall 21 can be rolled up in guides 22. The livestock in shed 2 hereby gains access to outside accommodation 17. In figure 4B wall 21 likewise has the function of second ventilation opening.

Outside accommodation 17 is covered. Animals are hereby protected from extreme rainfall and/or diseases which are for instance spread by excreta from for instance birds. It is also possible to adapt the covering such that it can be opened, for instance by means of a roller mechanism. Such techniques are known.

The outside accommodation is bounded by windbreak netting 23. Closable openings 24, for instance a door opening, are incorporated in windbreak netting 23. Animals can enter the natural outlying area through these opening. A natural outlying area is here understood to mean an area with natural planting such as trees and bushes. This area can comprise an area of natural origin or it can comprise vegetation planted for this purpose. The opportunity to spend time in such a natural outlying area enhances the well-being of the animals. The animals should however remain inside the outside accommodation 17 in the case of infectious diseases such as swine fever or avian influenza.

Sheds 2 comprise doors 25 so that access to the sheds is made possible for vehicles. It is also recommended to provide the sheds with a lengthwise wall (not shown). This wall divides a shed into two substantially identical parts. The two parts each correspond to another outside accommodation. The animals hereby have the option of choosing a different shed. This also prevents animals walking to sheds adjoining another outside accommodation.

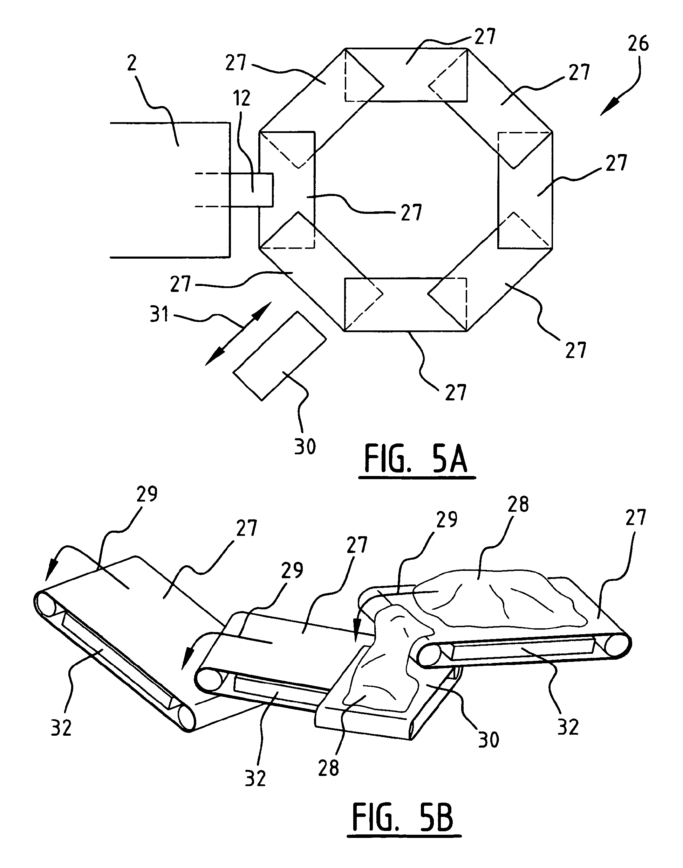

Figure 5A shows a top view of an embodiment of a manure discharge/storage device 26. This type of device is per se unrelated to the precise embodiment of the sheds or outside accommodations. Device 26 comprises an assembly of a number of conveyor belts 27. These belts are placed increasing in height as shown in the side view of figure 5B. Conveyor belts 27 transport manure 28 as according to arrows 29. This manure comes for instance from a conveyor belt 12 which carries manure out of a shed 2 as shown in figure 2A. A buffer of manure 28 is obtained with the circular embodiment.

At the highest point of conveyor belt 27 the manure 28 drops from the one conveyor belt 27 onto the other. The manure 28 can hereby be turned over, which per se already has the effect of enhancing the process of drying the manure 28. A separate conveyor belt 30 is incorporated in the device for the purpose of discharging manure 28 out of livestock accommodation 1. This belt 30 can be placed as according to arrow 31 in the conveyor belt assembly. Belt 30 herein collects manure 28 falling from a conveyor belt 27 as shown in figure 5B.

In order to further enhance the drying process ventilation containers 32 are provided to which the above discussed indrawn, preferably heated outside air is supplied. These ventilation containers 32 comprise openings through which air can flow through or along the manure 28. Conveyor belts 27 are possibly provided with openings through which the air can flow. The combination of ventilation containers 32 and the conveyor belt assembly results in a particularly advantageous device for the purpose of efficient drying of manure.

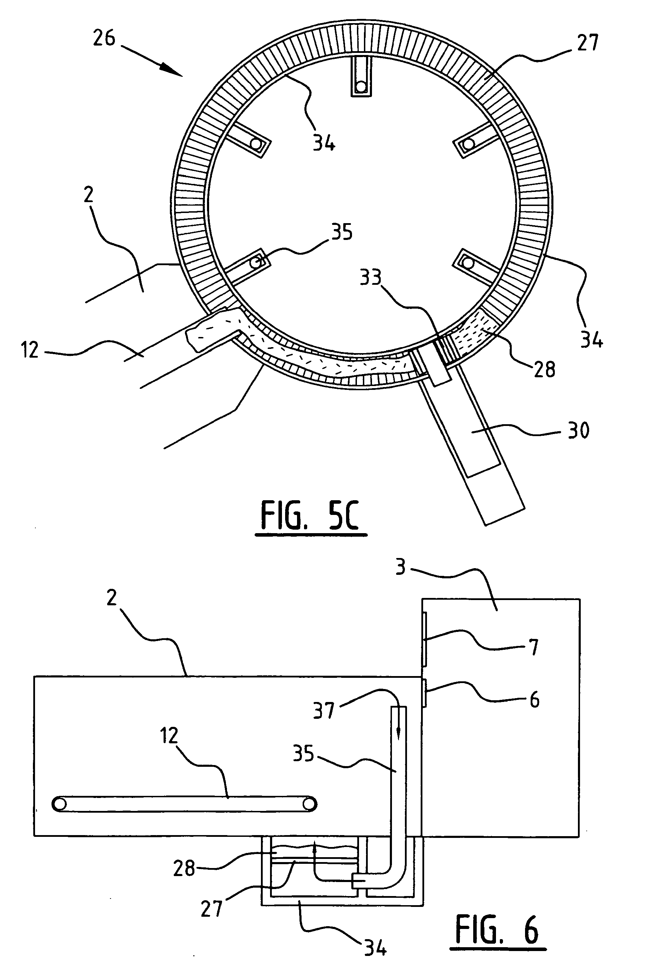

Figure 5C shows a top view of another embodiment of manure storage device 26. The individual conveyor belts 27 are here combined to form a continuous manure carousel with preferably one circular platform 27 provided with perforations for passage of air. In this embodiment manure is delivered by conveyor belt 12. The manure carousel is revolving here. It is otherwise possible for manure to be supplied simultaneously from different sheds. The manure will not generally form a uniform layer. Provided for this purpose is a manure unit 33 having a blade which distributes the manure over conveyor belt 12 such that a uniformly thick layer is obtained. Manure unit 33 can engage all manure by rotating the manure carousel. Once a homogenous layer has been obtained the manure carousel can be stopped, although this is not essential. The warm air can then be blown through the manure. In figure 5C this warm air comes from tubes 35, see also figure 1. This air is blown into an aerating container 34. This can be brought to (over)pressure so that the air can be pressed through the manure through the perforations in the platform.

Using the above device it is possible to realize a continuous manure processing. Feed of manure by conveyor belt 12 can thus take place simultaneously with the discharge of the manure by conveyor belt 30. A control can further be provided which tracks which part of the carousel is carrying dried manure and which part is carrying manure that has just been supplied. Such a control can then control manure unit 33 for the purpose of carrying out the correct operation, such as levelling or discharge.

When a carousel is completely filled, it can be set into rotation in order to discharge the manure. The thus created empty spaces can herein be simultaneously replenished with fresh manure. A continuous process can likewise be obtained by adjusting the rotation speed to the desired drying time. Conveyor belt 12, platform 27 and discharge conveyor 30 are preferably controlled by a control unit which can provide for the required adjustment. This control unit can then be coupled to or incorporated in the above-mentioned control unit for the ventilation. An increased ventilation will after all shorten the drying time, whereby the capacity of the manure carousel will increase.

The manure carousel is thus placed under shed 2 around central hall 3, see also the sectional view of figure 6. This latter figure also shows that air tube 35 runs through a bend under the manure. Air is supplied from below the manure. The air which is blown through the manure is preferably discharged to the outside.

Manure unit 33 is further provided with means such as a blade for the purpose of removing the manure from the manure carousel after drying thereof and optionally unloading the manure onto manure conveyor belt 30. The manure carousel is once again set into rotation here.

The present invention has been discussed using a number of embodiments and a detailed description. It will be apparent to the skill person that various modifications, changes and additions are possible without departing from the scope of protection of the invention, which will be defined in the following claims.

## Claims

1. Livestock accommodation (1) comprising a shed (2) extending in radial direction relative to a central hall (3), wherein the shed is provided with:
a first ventilation opening (6) which is in contact with the central hall;
a second ventilation opening (4) which is in contact with the air outside the shed;
wherein the central hall is provided with a plurality of controllable third ventilation openings (7) which are in contact with the outside air and which are distributed substantially uniformly along an outer periphery of the central hall;
**characterized in that**, the livestock accommodation comprises an anemometer as well as a control unit connected to this meter, which control unit is connected to said third controllable ventilation openings, and which livestock accommodation comprises a control for the purpose of obtaining natural ventilation, wherein the control comprises the functions of closing controllable third ventilation openings which are directed into the wind and opening controllable third ventilation openings directed away from the wind.

2. Livestock accommodation as claimed in claim 1, **characterized in that** the livestock accommodation comprises a plurality of sheds as defined in claim 1.

3. Livestock accommodation as claimed in claim 2, **characterized in that** the central hall comprises a fan (13) for drawing in outside air in addition to a heat exchanger (15) for exchanging heat between the indrawn outside air and air coming from a shed.

4. Livestock accommodation as claimed in claim 3, **characterized in that** the livestock accommodation comprises a manure storage device (11, 26) which is preferably placed in or around the central hall and which is adapted to store manure from a shed, wherein the manure storage device comprises an air supply for supplying the indrawn outside air and/or air coming from a shed to the stored manure.

5. Livestock accommodation as claimed in claim 3 or 4, **characterized in that** a shed comprises a fourth ventilation opening (16) for controlling the airflow of the indrawn outside air to the shed.

6. Livestock accommodation as claimed in claim 5, **characterized in that** said fourth ventilation opening can be controlled by said control unit.

7. Livestock accommodation as claimed in any of the claims 1-6, **characterized in that** at least one ventilation opening from the ventilation group consisting of the first and second ventilation openings can further be controlled by said control unit.

8. Livestock accommodation as claimed in any of the claims 1-7, **characterized in that** a shed comprises one or more temperature meters (36) which are connected to the control unit, wherein the control unit is adapted to control at least one of the first, second, third and/or fourth ventilation openings for the purpose of obtaining a preset temperature in the shed.

9. Livestock accommodation as claimed in claims 2-8, **characterized in that** sheds of the plurality of preferably identical sheds are separated from each other and wherein an intermediate space comprises an outside accommodation for livestock, wherein a shed preferably comprises a wall (21) which forms a separation between the shed and the outside accommodation for livestock, wherein the wall can be opened substantially in its entirety.

10. Livestock accommodation as claimed in claim 9, **characterized in that** said outside accommodation is covered and is provided on a side remote from the central hall with windbreak netting (23), wherein the outside accommodation preferably adjoins a fenced natural outlying area, wherein said windbreak netting preferably forms the separation and can be at least partially opened.

11. Livestock accommodation as claimed in any of the claims 1-10, **characterized in that** the livestock accommodation is adapted to keep poultry.

12. Method for ventilating a livestock accommodation as defined in claim 1, **characterized in that** the method comprises the steps of:
closing controllable third ventilation openings which are directed into the wind;
opening controllable third ventilation openings which are directed away from the wind.

13. Method as claimed in claim 12, being further adapted for ventilating a livestock accommodation as defined in claim 5, **characterized in that** the method further comprises the step of controlling the airflow in a shed by means of controlling at least one ventilation opening of the group consisting of the first, second and fourth ventilation openings.

14. Method as claimed in claim 13, further comprising the steps of measuring a temperature in a shed, determining a difference between the measured temperature and a preset temperature and modifying said control of the airflow subject to the difference.

## Patentansprüche

1. Unterbringung (1) für Viehbestand, die eine Halle oder einen Schuppen (2) aufweist, die oder der sich in radialer Richtung relativ zu einer zentralen Halle (3) erstreckt, wobei die Halle oder der Schuppen versehen ist mit:
einer ersten Lüftungsöffnung (6), die in Kontakt mit der zentralen Halle ist;
einer zweiten Lüftungsöffnung (4), die in Kontakt mit der Luft außerhalb der Halle oder des Schuppens ist;
wobei die zentrale Halle mit einer Mehrzahl von steuerbaren dritten Lüftungsöffnungen (7) versehen ist, die mit der Außenluft in Kontakt sind und die im Wesentlichen gleichförmig entlang des äußeren Umfangs der zentralen Halle verteilt sind;
**dadurch gekennzeichnet, dass** die Unterbringung für Viehbestand ein Anemometer und auch eine Steuereinheit aufweist, die mit diesem Messinstrument verbunden sind, welche Steuereinheit mit den dritten steuerbaren Lüftungsöffnungen verbunden ist, und welche Unterbringung für Viehbestand eine Steuerung für den Zweck, natürliche Lüftung zu erhalten, aufweist, wobei die Steuerung die Funktionen aufweist, steuerbare dritte Lüftungsöffnungen zu schließen, die in den Wind gerichtet sind, und steuerbare dritte Lüftungsöffnungen zu schließen, die vom Wind weggerichtet sind.

2. Unterbringung für Viehbestand nach Anspruch 1, **dadurch gekennzeichnet, dass** die Unterbringung für Viehbestand eine Mehrzahl von Hallen oder Schuppen aufweist, wie sie in Anspruch 1 definiert sind.

3. Unterbringung für Viehbestand nach Anspruch 2, **dadurch gekennzeichnet, dass** die zentrale Halle ein Gebläse (13) zum Hereinziehen von Außenluft zusätzlich zu einem Wärmetauscher (15) zum Austauschen von Wärme zwischen der hereingezogenen Außenluft und Luft aufweist, die von einer Halle oder einem Schuppen kommt.

4. Unterbringung für Viehbestand nach Anspruch 3, **dadurch gekennzeichnet, dass** die Unterbringung für Viehbestand eine Dungspeichereinrichtung (11, 26) aufweist, die vorzugsweise in der oder um die zentrale Halle herum angeordnet ist und die dazu ausgebildet ist, Dung von einer Halle oder einem Schuppen zu speichern, wobei die Dungspeichereinrichtung eine Luftzufuhr zum Zuführen der hineingezogenen Außenluft und/oder Luft, die von einer Halle oder einem Schuppen kommt, zu dem gespeicherten Dung aufweist.

5. Unterbringung für Viehbestand nach Anspruch 3 oder 4, **dadurch gekennzeichnet, dass** eine Halle oder ein Schuppen eine vierte Lüftungsöffnung (16) zum Steuern der Luftströmung der hereingezogenen Außenluft zur Halle oder zum Schuppen aufweist.

6. Unterbringung für Viehbestand nach Anspruch 5, **dadurch gekennzeichnet, dass** die vierte Lüftungsöffnung durch die Steuereinheit gesteuert werden kann.

7. Unterbringung für Viehbestand nach einem der Ansprüche 1 bis 6, **dadurch gekennzeichnet, dass** wenigstens eine Lüftungsöffnung von der Lüftungsgruppe, die aus den ersten und zweiten Lüftungsöffnungen besteht, außerdem durch die Steuereinheit gesteuert werden kann.

8. Unterbringung für Viehbestand nach einem der Ansprüche 1 bis 7, **dadurch gekennzeichnet, dass** eine Halle oder ein Schuppen ein oder mehrere Temperaturmessgeräte (36) aufweist, die mit der Steuereinheit verbunden sind, wobei die Steuereinheit dazu ausgebildet ist, wenigstens eine der ersten, zweiten, dritten und/oder vierten Lüftungsöffnungen zum Zweck zu steuern, eine voreingestellte Temperatur in der Halle oder dem Schuppen zu erhalten.

9. Unterbringung für Viehbestand nach einem der Ansprüche 2 bis 8, **dadurch gekennzeichnet, dass** die Hallen oder Schuppen der Mehrzahl von vorzugsweise identischen Hallen oder Schuppen voneinander getrennt sind, und wobei ein Zwischenraum eine Unterbringung im Freien für Viehbestand aufweist, wobei vorzugsweise eine Halle oder ein Schuppen eine Wand (21) aufweist, die eine Trennung zwischen der Halle oder dem Schuppen und der Unterbringung im Freien für Viehbestand bildet, wobei die Wand im Wesentlichen vollständig geöffnet werden kann.

10. Unterbringung für Viehbestand nach Anspruch 9, **dadurch gekennzeichnet, dass** die Unterbringung im Freien abgedeckt ist und an einer Seite entfernt von der zentralen Halle mit windbrechendem Geflecht (23) versehen ist, wobei die Unterbringung im Freien vorzugsweise an ein eingezäuntes natürliches außenliegendes Gebiet angrenzt, wobei das windbrechende Geflecht vorzugsweise die Trennung bildet und wenigstens teilweise geöffnet werden kann.

11. Unterbringung für Viehbestand nach einem der Ansprüche 1 bis 10, **dadurch gekennzeichnet, dass** die Unterbringung für Viehbestand dazu ausgebildet ist, Geflügel zu halten.

12. Verfahren zum Lüften einer Unterbringung für Viehbestand nach Anspruch 1, **dadurch gekennzeichnet, dass** das Verfahren die Schritte aufweist:
steuerbare dritte Lüftungsöffnungen zu schließen, die in den Wind gerichtet sind;
steuerbare dritte Lüftungsöffnungen zu öffnen, die vom Wind weggerichtet sind.

13. Verfahren nach Anspruch 12, das weiter dazu ausgebildet ist, eine Unterbringung für Viehbestand zu lüften, wie sie in Anspruch 5 definiert ist, **dadurch gekennzeichnet, dass** das Verfahren weiter den Schritt aufweist, die Luftströmung in einer Halle oder einem Schuppen **dadurch** zu steuern, dass wenigstens eine Lüftungsöffnung der Gruppe gesteuert wird, die aus den ersten, zweiten und vierten Lüftungsöffnungen besteht.

14. Verfahren nach Anspruch 13, das weiter die Schritte aufweist, eine Temperatur in einer Halle oder einem Schuppen zu messen, einen Unterschied zwischen der gemessenen Temperatur und einer vorbestimmten Temperatur zu bestimmen und die Steuerung der Luftströmung in Abhängigkeit von diesem Unterschied zu ändern.

## Revendications

1. Bâtiment d'élevage (1) comprenant un hangar (2) s'étendant dans une direction radiale par rapport à une salle centrale (3), où le hangar est muni de :
une première ouverture de ventilation (6) qui est en contact avec la salle centrale ;
une deuxième ouverture de ventilation (4) qui est en contact avec l'air à l'extérieur du hangar ;
où la salle centrale est munie d'une pluralité de troisièmes ouvertures de ventilation commandables (7) qui sont en contact avec l'air extérieur et qui sont réparties sensiblement uniformément le long d'une périphérie extérieure de la salle centrale ;
**caractérisé en ce que**, le bâtiment d'élevage comprend un anémomètre ainsi qu'une unité de commande reliée à cet appareil de mesure, laquelle unité de commande est reliée auxdites troisièmes ouvertures de ventilation commandables, et lequel bâtiment d'élevage comprend une commande dans le but d'obtenir une ventilation naturelle, où la commande comprend les fonctions de fermeture des troisièmes ouvertures de ventilation commandables qui sont dirigées dans le sens du vent et d'ouverture des troisièmes ouvertures de ventilation commandables dirigées à l'opposé du sens du vent.

2. Bâtiment d'élevage selon la revendication 1, **caractérisé en ce que** le bâtiment d'élevage comprend une pluralité de hangars selon la revendication 1.

3. Bâtiment d'élevage selon la revendication 2, **caractérisé en ce que** la salle centrale comprend un ventilateur (13) servant à aspirer de l'air extérieur en plus d'un échangeur thermique (15) servant à échanger de la chaleur entre l'air extérieur aspiré et l'air provenant d'un hangar.

4. Bâtiment d'élevage selon la revendication 3, **caractérisé en ce que** le bâtiment d'élevage comprend un dispositif de stockage de fumier (11, 26) qui est placé de préférence à l'intérieur ou autour de la salle centrale et qui est adapté pour stocker du fumier provenant d'un hangar, où le dispositif de stockage de fumier comprend une alimentation d'air pour alimenter de l'air extérieur aspiré et/ou de l'air provenant d'un hangar vers le fumier stocké.

5. Bâtiment d'élevage selon la revendication 3 ou 4, **caractérisé en ce qu'**un hangar comprend une quatrième ouverture de ventilation (16) pour commander l'écoulement d'air de l'air extérieur aspiré vers le hangar.

6. Bâtiment d'élevage selon la revendication 5, **caractérisé en ce que** ladite quatrième ouverture de ventilation peut être commandée par ladite unité de commande.

7. Bâtiment d'élevage selon l'une quelconque des revendications 1 à 6, **caractérisé en ce qu'**au moins une ouverture de ventilation parmi le groupe de ventilation consistant en les première et deuxième ouvertures de ventilation peut en outre être commandée par ladite unité de commande.

8. Bâtiment d'élevage selon l'une quelconque des revendications 1 à 7, **caractérisé en ce qu'**un hangar comprend un ou plusieurs appareils thermomètres (36) qui sont reliés à l'unité de commande, laquelle unité de commande est adaptée pour commander au moins l'une des première, deuxième, troisième et/quatrième ouvertures de ventilation dans le but d'obtenir une température prédéterminée dans le hangar.

9. Bâtiment d'élevage selon les revendications 2 à 8, **caractérisé en ce que** des hangars de la pluralité de hangars de préférence identiques sont séparés les uns des autres et où un espace intermédiaire comprend un bâtiment extérieur pour le bétail, où un hangar comprend de préférence une paroi (21) qui forme une séparation entre le hangar et le bâtiment extérieur pour le bétail, où la paroi peut être ouverte sensiblement dans son intégralité.

10. Bâtiment d'élevage selon la revendication 9, **caractérisé en ce que** ledit bâtiment extérieur est couvert et est muni sur un côté éloigné de la salle centrale de filets brise-vent (23), où le bâtiment extérieur communique avec une région isolée naturelle clôturée, où ledit filet brise-vent forme de préférence la séparation et peut être au moins partiellement ouvert.

11. Bâtiment d'élevage selon l'une quelconque des revendications 1 à 10, **caractérisé en ce que** le bâtiment d'élevage est adapté pour contenir des volailles.

12. Procédé de ventilation d'un bâtiment d'élevage selon la revendication 1, **caractérisé en ce que** le procédé comprend les étapes de :
fermeture des troisièmes ouvertures de ventilation commandables qui sont dirigées dans le sens du vent ;
ouverture des troisièmes ouvertures de ventilation commandables qui sont dirigées dans le sens opposé au vent.

13. Procédé selon la revendication 12, qui est en outre adapté pour ventiler un bâtiment d'élevage selon la revendication 5, **caractérisé en ce que** le procédé comprend en outre l'étape de commande de l'écoulement d'air dans un hangar au moyen de la commande d'au moins une ouverture de ventilation du groupe consistant en les première, deuxième et quatrième ouvertures de ventilation.

14. Procédé selon la revendication 13, comprenant en outre les étapes consistant à mesurer une température dans un hangar, déterminer une différence entre la température mesurée et une température prédéterminée et modifier ladite commande de l'écoulement d'air exposé à la différence.
